# DEMANDE DE BREVET EUROPEEN

(11) **EP 1 872 888 A2**
(43) Date de publication de la demande: **02.01.2008**
(21) Numéro de dépôt: 07380192.0
(22) Date de dépôt: 28.06.2007
(51) Int. Cl.: B23B 31/00

(54) **Ecrou de porte-outils, à refoidissement incorporé**

(30) Priorité: 29.06.2006 ES 200601754
(71) Demandeur: LAIP, S.A., 48220 Abadiano (ES)
(72) Inventeur: Larraskitu Bernaola, Aitor, 48220 Abadiano (Bizkaia) (ES)
(74) Mandataire: Urizar Barandiaran, Miguel Angel

(57) **Abrégé**

Écrou de porte-outils, à refroidissement incorporé, de ceux qui sont employés sur les porte-pinces à fort serrage, pour la fixation d'outils de coupe sur une machine-outil, dans lequel le corps (1) de cet écrou comporte, au moins, un conduit (11) qui le traverse, son entrée (E) étant raccordée à un alimenteur de fluide de refroidissement (r) et sa sortie (S) ayant une trajectoire formant un angle (β), afin de l'orienter vers la zone de travail de cet outil de coupe (h).

Sur le corps (1) de cet écrou, un ou plusieurs conduits (11) sont façonnés, étant déphasés entre eux d'une amplitude (α) quelconque et percés longitudinalement avec une trajectoire formant un certain angle (β) d'inclinaison par rapport à son axe principal (e), afin d'orienter le fluide de refroidissement (r) vers la zone de travail de l'outil de coupe (h).

## Description

L'objet de l'invention est un écrou de porte-outils à refroidissement incorporé et, plus concrètement, un écrou de porte-pinces à fort serrage pour l'amarrage rigide de l'outil de coupe sur la machine-outil, qui comprend un système de refroidissement interne incorporé avec sortie frontale tournée vers la zone de travail de cet outil de coupe.

Dans l'état actuel de la technique, on connaît déjà les écrous porte-pinces à fort serrage pour fixer les outils de coupe sur la machine-outil. On connaît également les systèmes de refroidissement basés sur des conduites extérieures, rigides ou souples, qui arrivent à la zone de travail de l'outil. On connaît même des outils creux à travers lesquels coule le réfrigérant jusqu'à son arrivée à la zone de travail.

Les conduites extérieures de refroidissement posent des problèmes d'accès dans le milieu et les conduites de refroidissement à travers l'outil lui-même en affaiblissent le noyau, ce qui est préjudiciable pour les conditions de travail.

L'écrou qui fait l'objet de l'invention résout avantageusement ces deux limitations, en éliminant les conduites auxiliaires du milieu de travail sans affaiblir la structure de l'outil lui-même. S'agissant de ceux qui sont employés sur les porte-pinces à fort serrage pour la fixation d'outils de coupe sur une machine-outil, cette invention se caractérise par le fait que le corps de cet écrou comporte, au moins, un conduit qui le traverse, son entrée étant accouplée à un alimenteur de fluide de refroidissement et sa sortie tournée vers la zone de travail de cet outil de coupe.

À partir de cette conception de base, toutes les réalisations quelles qu'elles soient qui n'en altérent, ni n'en changent ou modifient le caractère essentiel proposé sont incluses dans l'objet de l'invention et, notamment que :
- sur le corps de cet écrou, une pluralité de conduits déphasés entre eux ayant une amplitude (α) quelle qu'elle soit, est usinée en vue de l'obtention d'un refroidissement total de l'outil de coupe, ainsi que d'une propreté parfaite des abords de la zone de travail.
- Lors de l'usinage, le conduit ou les conduits sont percés longitudinalement dans le corps de l'écrou.
- Un ou plusieurs de ces conduits présentent, au moins, deux trajectoires déphasées entre elles, l'une d'entre elles formant un certain angle de sortie, afin de l'orienter vers la zone de travail de l'outil de coupe.

Pour mieux comprendre l'objet de la présente invention, on représente sur les plans une forme préférentielle de réalisation pratique, susceptible de changements accessoires, qui n'en dénaturent pas le fondement.
La figure 1 représente une vue générale de profil en long d'un écrou de porte-outils, avec un refroidissement incorporé selon l'invention, avec son corps (1) partiellement sectionné par la zone qui comporte un conduit (11) usiné.
La figure 2 représente une vue frontale correspondant à la figure 1.
La figure 3 représente une vue postérieure correspondant à la figure 1 .
Les figures 4a et 4b représentent deux détails agrandis selon les indications A et B respectives de la figure 1.
La figure 5 représente une vue schématique, similaire à la figure 1, pour une réalisation alternative.
La figure 6 représente une vue générale de l'écrou qui fait l'objet de l'invention dans une position de travail, monté sur un accouplement normalisé (a) et avec une représentation schématique du réfrigérant (r) et de deux outils (h) aux diamètres maximum-minimum admissibles.

On décrit ci-dessous un exemple de réalisation pratique, non limitative, de la présente invention.

L'objet de l'invention est un écrou de porte-outils, avec un refroidissement incorporé, de ceux employés sur les porte-pinces à fort serrage, pour la fixation d'outils de coupe sur une machine-outil.

On prend comme point de départ un écrou, de ceux qui sont connus, dont le corps (1) présente des mesures standard de référence ; de façon à ce que le nouvel écrou, qui fait l'objet de l'invention, soit applicable à un porte-pinces à fort serrage, comme ceux utilisés pour l'amarrage rigide des outils de coupe sur une machine-outil.

Conformément à l'invention, le corps (1) de cet écrou comporte, au moins, un conduit (11) qui le traverse longitudinalement.

Il est indifférent et accessoire, aux fins de l'invention, que le corps (1) comporte une pluralité de conduits (11) qui le traversent, ces conduits (11) étant déphasés entre eux à des amplitudes angulaires (α) quelles qu'elles soient, identiques ou différentes.

Lors de leur usinage, les conduits (11) sont percés longitudinalement dans le corps (1) de l'écrou, formant un certain angle (β) d'inclinaison par rapport à son axe principal (e).

L'entrée (E) de ces conduits (11) est accouplée hermétiquement à un alimenteur de fluide de refroidissement (r). Leur sortie (S) forme un certain angle (β) par rapport à l'axe (e) de l'écrou et de l'outil, afin de l'orienter vers la zone de travail de l'outil de coupe (h).

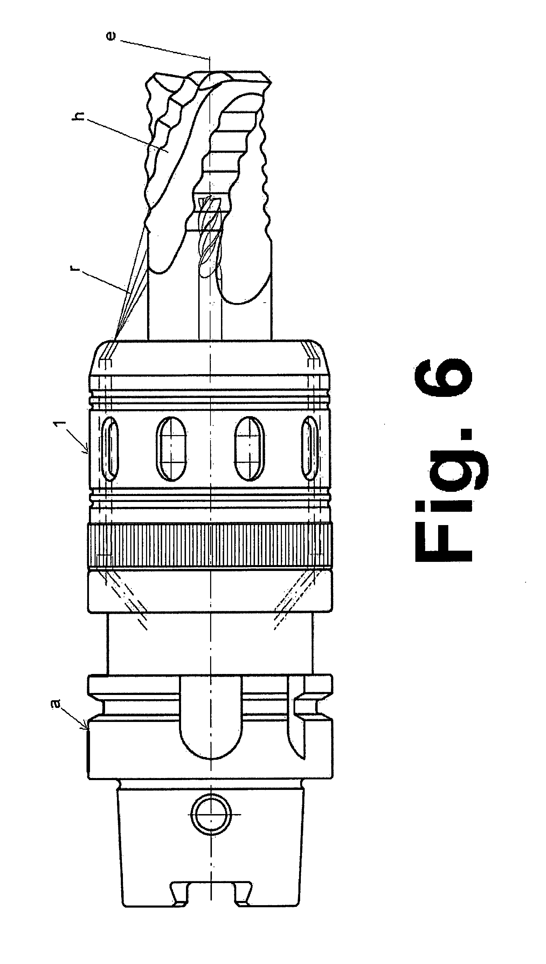

En fonction de l'angle de sortie (β), la hauteur/portée du fluide réfrigérant varie elle aussi, ce fluide réfrigérant (r) pouvant atteindre différentes zones de travail de l'outil de coupe (h) -voir figure 6- en s'écoulant dans différents conduits (11) avec des angles de sortie (β) différents.

En particulier et selon la réalisation représentée, au moins un de ces conduits (11) présente deux trajectoires (11a), (11b) déphasées entre elles d'un certain angle qui coïncide avec l'angle de sortie (β) si, comme c'est le cas, l'une des trajectoires (11a) est parallèle à l'axe principal (e) de l'écrou (1) et de l'outil (h).

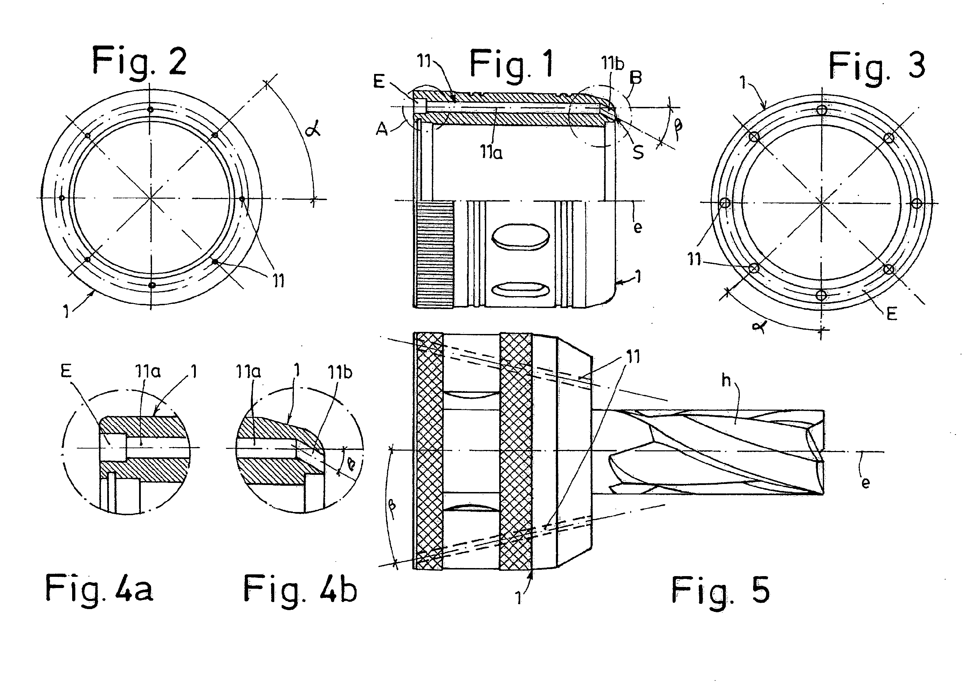

Toute réalisation alternative qui n'altère, ni ne change ou modifie le caractère essentiel proposé, est incluse dans l'objet de l'invention: par exemple, façonner sur le corps (1) les conduits (11) avec une unique trajectoire droite ayant un certain angle (β) d'inclinaison par rapport à l'axe principal (e) de l'écrou (comme dans la réalisation représentée à la figure 5).

## Revendications

1. Écrou de porte-outils à refroidissement incorporé, de ceux qui sont employés sur des porte-pinces à fort serrage pour la fixation d'outils de coupe sur une machine-outil; **se caractérisant par le fait que** le corps (1) de cet écrou comporte, au moins, un conduit (11) qui le traverse ; son entrée (E) étant raccordée à un alimenteur de fluide de refroidissement (r) et sa sortie (S) ayant une trajectoire qui forme un angle (β), afin de l'orienter vers la zone de travail de cet outil de coupe (h).

2. Écrou de porte-outils à refroidissement incorporé, selon la revendication antérieure, **se caractérisant par le fait que**, sur le corps (1) de cet écrou, on usine une pluralité de conduits (11) déphasés entre eux d'une amplitude (α) quelle qu'elle soit, afin d'obtenir un refroidissement total de l'outil de coupe (h) ainsi qu'une propreté parfaite des abords de la zone de travail.

3. Écrou de porte-outils, à refroidissement incorporé, selon les revendications antérieures, **se caractérisant par le fait que** le conduit ou les conduits (11) sont, lors de leur usinage, percés longitudinalement dans le corps (1) de l'écrou et ont une trajectoire ayant un certain angle (β) d'inclinaison par rapport à son axe principal (e), afin de l'orienter vers la zone de travail de l'outil de coupe (h).

4. Écrou de porte-outils, à refroidissement incorporé, selon les revendications antérieures, **se caractérisant par le fait qu'**un ou plusieurs de ces conduits (11) présentent, au moins, deux trajectoires (11a), (11b) déphasées entre elles, l'une d'entre elles (11b) formant un certain angle de sortie (β), afin de l'orienter vers la zone de travail de l'outil de coupe (h).
